# EUROPEAN PATENT APPLICATION

(11) **EP 2 884 610 A1**
(43) Date of publication of application: **17.06.2015**
(21) Application number: 14191599.1
(22) Date of filing: 04.11.2014
(51) Int. Cl.: H02G 3/22

(54) **Electrical cable duct**

(30) Priority: 29.11.2013 GB 201321094
(71) Applicant: CATERPILLAR (NI) LIMITED, Larne BT40 1EJ (GB)
(72) Inventor: Todd, James George, Larne, Antrim BT40 2LF (GB); McAllister, Mark Anthony, Larne, Antrim BT40 1DH (GB)
(74) Representative: Boult Wade Tennant

(57) **Abstract**

The present disclosure relates to an electrical cable duct 26 for use within a generator set 10. The cable duct 26 includes a flange portion 28 and a body portion 30. Conventional methods of routing electrical cables within a generator set require costly cable conduits and glands. The cable duct of the present disclosure protects cables from the elements and vibration in a cost efficient design that is easy to manufacture and install.

## Description

### Technical Field

The present disclosure relates to an electrical cable duct, and more specifically to an electrical cable duct for routing power cables within a generator set.

### Background

Generator set enclosures housing an engine, alternator and control panel are made of a rigid construction. These enclosures usually contain separate compartments for each of the aforementioned components. Cables running from the control panel to the alternator are also necessary for the generator set to function properly. These cables can be routed from the control panel to the alternator in a variety of ways. For example, the cables can be routed through a cable gland and into a flexible cable conduit. The physical characteristics of the cable gland and the flexible cable conduit require a minimum amount of space for implementation. For example, use of the cable gland requires a minimum of 3-5 inches between compartments of the generator set. Moreover, the flexible cable conduit must be a minimum length of 15-20 inches because anything less would limit the flexibility of conduit. Although the use of a cable gland and flexible cable conduit protects the cables that are routed therein, the space required to implement them necessarily requires longer cables. Longer cables lead to increased costs.

A preferable design would provide a cable duct for the power cables to run directly from the control panel compartment to alternator compartment while still protecting the power cables from the environment and vibrations.

### Summary of the Disclosure

In one aspect of the present disclosure, a cable duct is provided, the cable duct being configured for routing cables between compartments of a generator set. The cable duct includes a body portion having an inner face and an outer face. The body portion defines a hole extending between the inner face and outer face. The cable duct also includes a flange portion having an inner face and an outer face. The flange portion defines a hole extending between the inner face and outer face. The inner face of the flange portion is in contact with the inner face of the body portion such that the holes respectively defined by the body portion and the flange portion are substantially aligned with one another.

In another aspect of the present disclosure A generator set is provided. The generator set includes an engine, an alternator and a cable duct. The cable duct is configured for routing cables between compartments of a generator set. The cable duct includes a body portion having an inner face and an outer face. The body portion defines a hole extending between the inner face and outer face. The cable duct also includes a flange portion having an inner face and an outer face. The flange portion defines a hole extending between the inner face and outer face. The inner face of the flange portion is in contact with the inner face of the body portion such that the holes respectively defined by the body portion and the flange portion are substantially aligned with one another.

In another aspect, the present disclosure describes a method of routing cables within a generator set. The method includes the step of providing a generator set having an engine, an alternator, and a control panel, wherein the control panel is housed within a first compartment and the alternator is housed within a second compartment. The method also includes the step of providing cable duct. The cable duct includes a body portion having an inner face and an outer face. The body portion further defines a hole extending between the inner face and the outer face. The cable duct also includes a flange portion. The flange portion includes an inner face and an outer face. The flange portion also defines a hole extending between the inner face and outer face. The inner face of the flange portion is in contact with the inner face of the body portion such that the holes respectively defined by the body portion and the flange portion are substantially aligned with one another. The method also includes the step of positioning the body portion within a hole in a wall of the first compartment and extending into a hole in a wall of the second compartment. The method also includes the step of routing cables from the control panel in the first compartment through the cable duct and to the alternator in the second compartment.

Other features and aspects of this disclosure will be apparent from the following description and the accompanying drawings.

### Brief Description of the Drawings

Figure 1 is a partial view of an exemplary generator set showing the disclosed cable duct;
Figure 2 is a front perspective view of an embodiment of the disclosed cable duct;
Figure 3 is a rear perspective view of an embodiment of the disclosed the cable duct;
Figure 4 is an exploded front perspective view of an embodiment of the disclosed cable duct;
Figure 5 is a front perspective view of an alternate embodiment of the disclosed cable duct;
Figure 6 is a front perspective view of yet another embodiment of the disclosed cable duct;
Figure 7 is a plan view of an alternator compartment showing an embodiment of the cable duct; and
Figure 8 is a end view of an exemplary generator showing a placement of the disclosed cable duct.

### Detailed Description

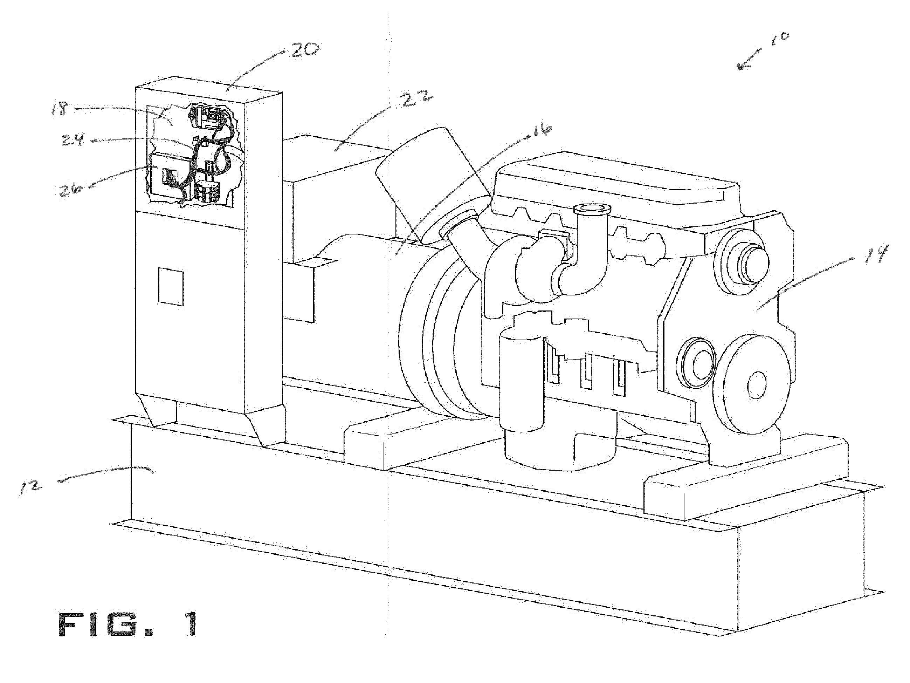

Figure 1 shows an exemplary generator set 10, according to an embodiment of the present disclosure. The generator set 10 may have a frame 12. The generator set 10 may include a number of components. Such components may include, but are not limited to, an engine 14, an alternator 16, and a control panel 18. The control panel 18 may be housed within a control panel compartment 20. The alternator 16 may be housed within an alternator compartment 22. The generator set 10 may also include a variety of cables 24. Cables 24 may be used for a variety of different purposes, including but not limited to power and controls. For example, cables 24 may be connected to the control panel 18 and extend from the control panel compartment 20 into the alternator compartment 22, where they may be connected to the alternator 16. The generator set may further include a cable duct 26 for routing and protecting electrical cables. A cable duct 26 may within the control panel compartment 20 and may be configured to facilitate the routing of cables 24 from the control panel compartment 20 to the alternator compartment 22.

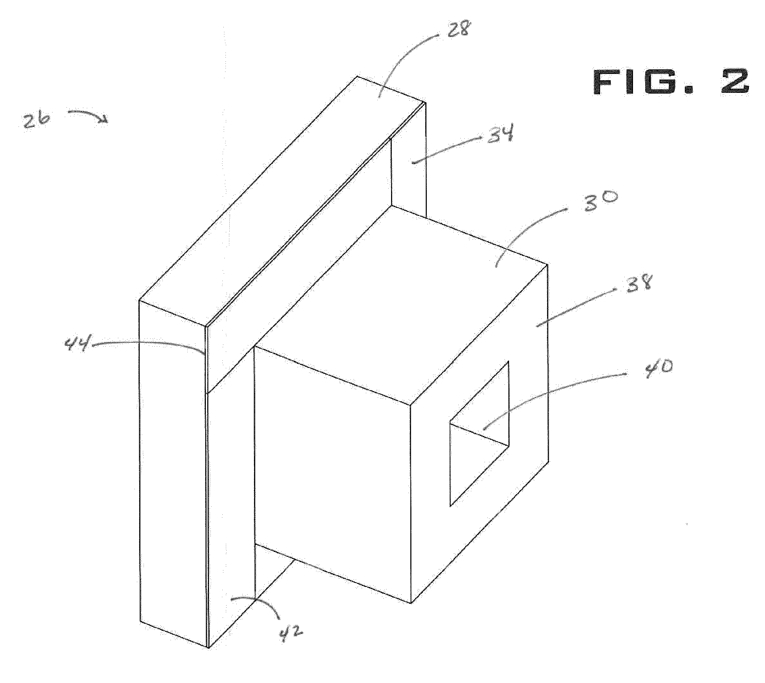

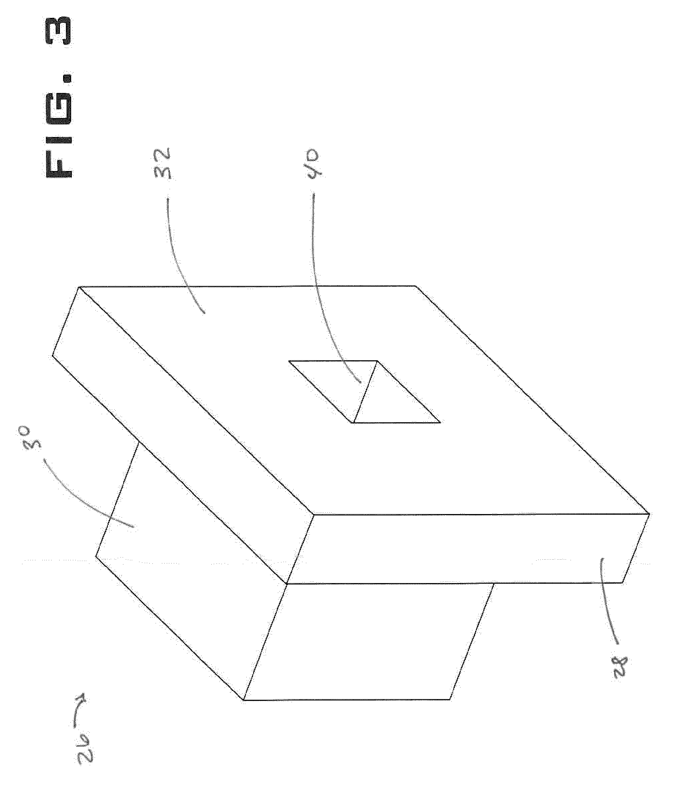

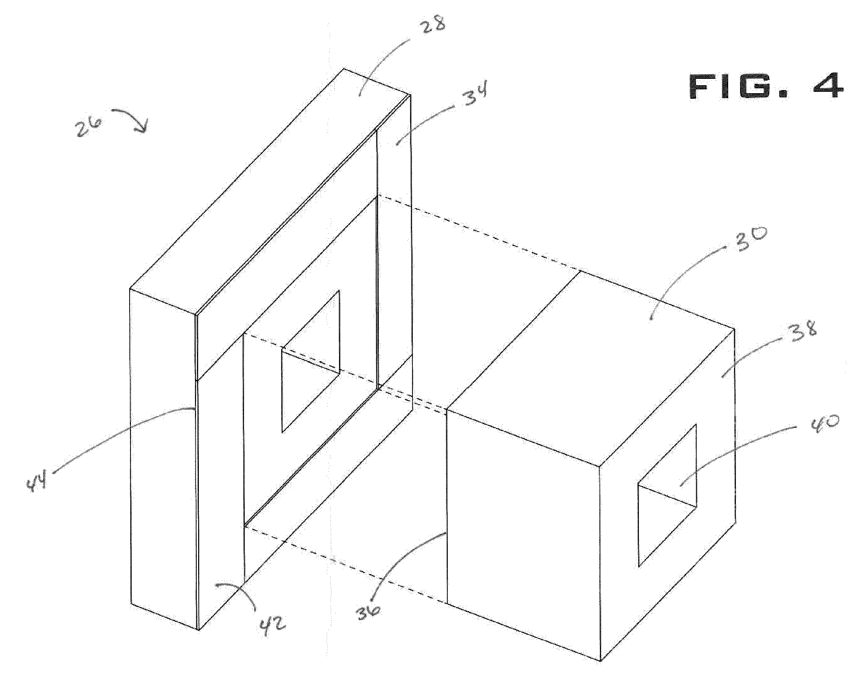

Figures 2 and 3 depict alternate views of an exemplary embodiment of cable duct 26. Cable duct 26 includes a flange portion 28 and a body portion 30. Flange portion 28 includes an outer face 32 and an inner face 34. The body portion 30 of cable duct 26 also includes an inner face 36 and an outer face 38. From a surface area standpoint, the inner face 34 of flange portion 28 is larger than the inner face 36 of the body portion. Flange portion 30 also defines a hole that extends from the outer face 32 to its inner face 34. The body portion 30 also defines a hole that extends from the inner face 36 to its outer face 38. Those skilled in the art will recognize that the flange portion 28 and the body portion 30 may be made from a single piece of material or may be assembled from separate pieces (as shown in Figure 4). Whether manufactured from a single piece or assembled from multiple pieces, the holes respectively defined by the flange portion 28 and the body portion 30 are substantially aligned so that a single hole 40 runs through the entire cable duct 26.

Figure 4 depicts the assembly of cable duct 26 wherein the flange portion 28 and the body portion 30 are made from separate pieces. In an embodiment such as this, cable duct 26 is manufactured by aligning the holes defined respectively by the flange portion 28 and the body portion 30, and then adhering the respective inner faces 34, 36 to one another. Those skilled in the art will recognize that inner faces 34, 36 can be adhered to one another by acrylic glue, adhesive, or any other practical binding method.

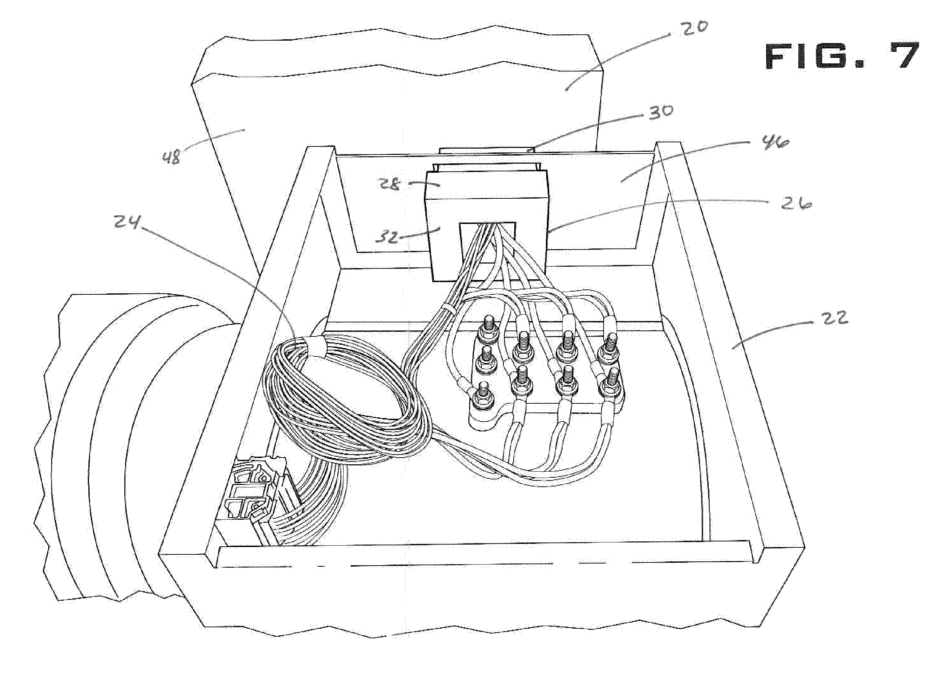

As shown in Figures 2 and 4, the inner face 34 of the flange portion 28 includes an adhesive portion 42, which is defined by the area that is not obscured by the body portion 30, when the body portion 30 is adhered to the flange portion 28. The adhesive portion 42 may include one or more pieces of adhesive 44. In an exemplary embodiment, adhesive 44 may be used to affix the flange portion 28 to the inside wall of a compartment of a generator set while the body portion 30 is inserted through a hole in the same wall of said compartment and into a hole an adjacent compartment (See Figure 7). Adhesive 44 may be an epoxy, double sided tape, or other adhesive that is suitable for affixing the cable duct into the aforementioned position. For example, adhesive 44 may be a pressure sensitive adhesive that is applied on one or more special release liners that are designed for quick and easy application of neat precise strips of dry adhesive. Adhesive 44 may be a firm acrylic adhesive featuring high bond strength and excellent high temperature performance and excellent solvent resistance.

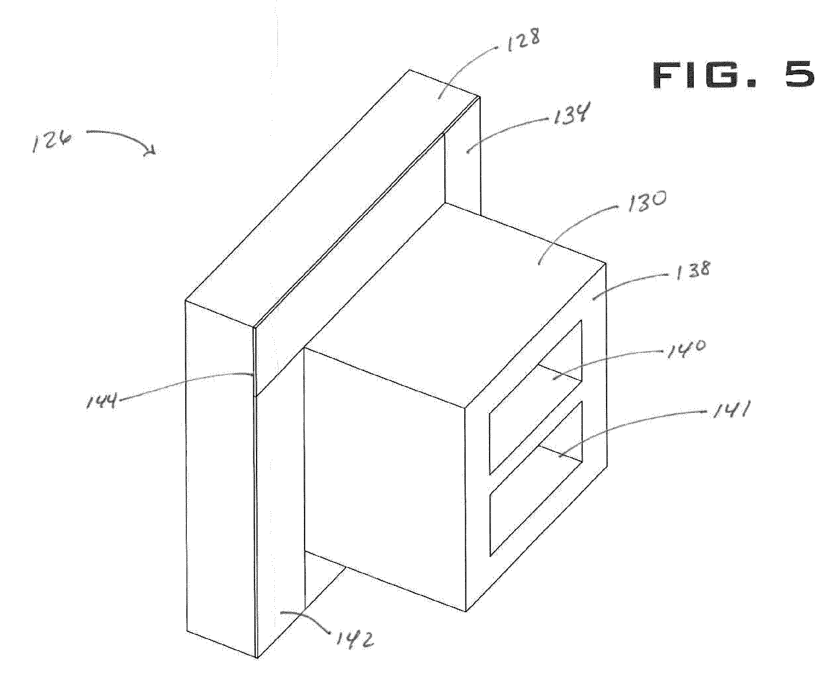

Figure 5 depicts an alternate embodiment of cable duct 126. In this embodiment, cable duct 126 includes a flange portion 128 defining two holes and a body portion 30 defining two holes, wherein the two holes of the flange portion 128 and the two holes of the body portion 130 are aligned such that two holes run through cable duct 126. Those skilled in the art will recognize that alternate embodiments having more than two holes could be envisaged without departing from the scope and spirit of the present disclosure.

The inner face 134 of the flange portion 128 includes an adhesive portion 142, which is defined by the area that is not obscured by the body portion 130, when the body portion 130 is adhered to the flange portion 128. The adhesive portion 142 may include one or more pieces of adhesive 144. Adhesive 144 may be an epoxy, double sided tape, or other adhesive that is suitable for affixing the cable duct into the aforementioned position. For example, adhesive 144 may be a pressure sensitive adhesive that is applied on one or more special release liners that are designed for quick and easy application of neat precise strips of dry adhesive. Adhesive 144 may be a firm acrylic adhesive featuring high bond strength and excellent high temperature performance and excellent solvent resistance.

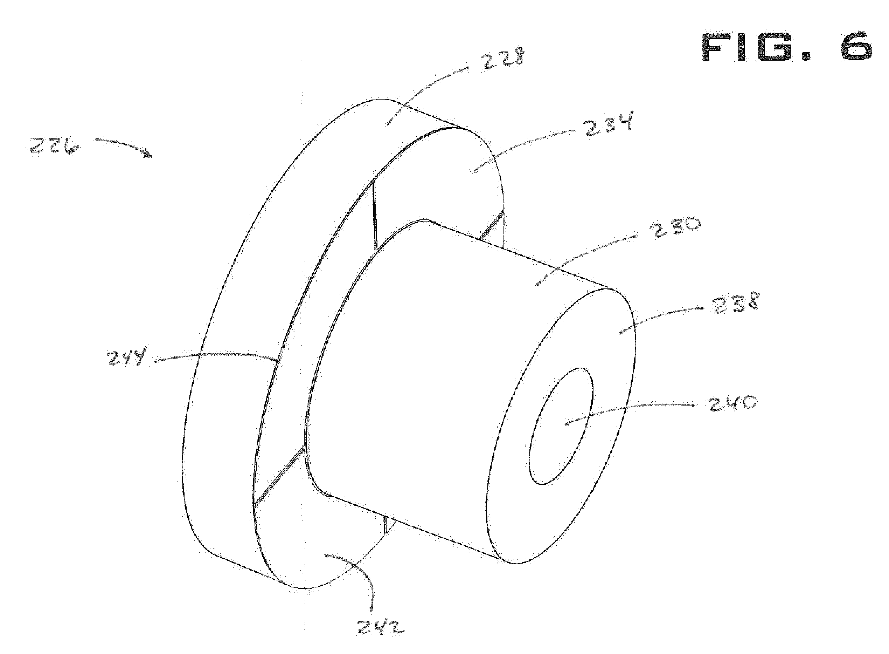

Heretofore, the disclosed embodiments of the disclosed cable duct have been substantially cuboid in shape. However, those skilled in the art will recognize that alternate embodiments of the cable duct may take on any number of geometric shapes. For example, Figure 6 depicts a perspective view of a cable duct 226 that is substantially cylindrical in shape. Cable duct 226 includes a flange portion 228 and a body portion 230. Flange portion 228 includes an outer face 232 and an inner face 234. The body portion 230 of cable duct 226 also includes an inner face 236 and an outer face 238. From a surface area standpoint, the inner face 234 of flange portion 228 is larger than the inner face 236 of the body portion. Flange portion 230 also defines a hole that extends from the outer face 232 to its inner face 234. The body portion 230 also defines a hole that extends from the inner face 136 to its outer face 238. Those skilled in the art will recognize that the flange portion 228 and the body portion 230 may be made from a single piece of material or may be assembled from separate pieces. Whether assembled from a single piece or manufactured from multiple pieces, the holes respectively defined by the flange portion 228 and the body portion 230 are substantially aligned so that a single hole 240 runs through the entire cable duct 226.

The inner face 234 of the flange portion 228 includes an adhesive portion 242, which is defined by the area that is not obscured by the body portion 230, when the body portion 230 is adhered to the flange portion 228. The adhesive portion 242 may include one or more pieces of adhesive 244. Adhesive 244 may be an epoxy, double sided tape, or other adhesive that is suitable for affixing the cable duct into the aforementioned position. For example, adhesive 244 may be a pressure sensitive adhesive that is applied on one or more special release liners that are designed for quick and easy application of neat precise strips of dry adhesive. Adhesive 244 may be a firm acrylic adhesive featuring high bond strength and excellent high temperature performance and excellent solvent resistance.

### Industrial Applicability

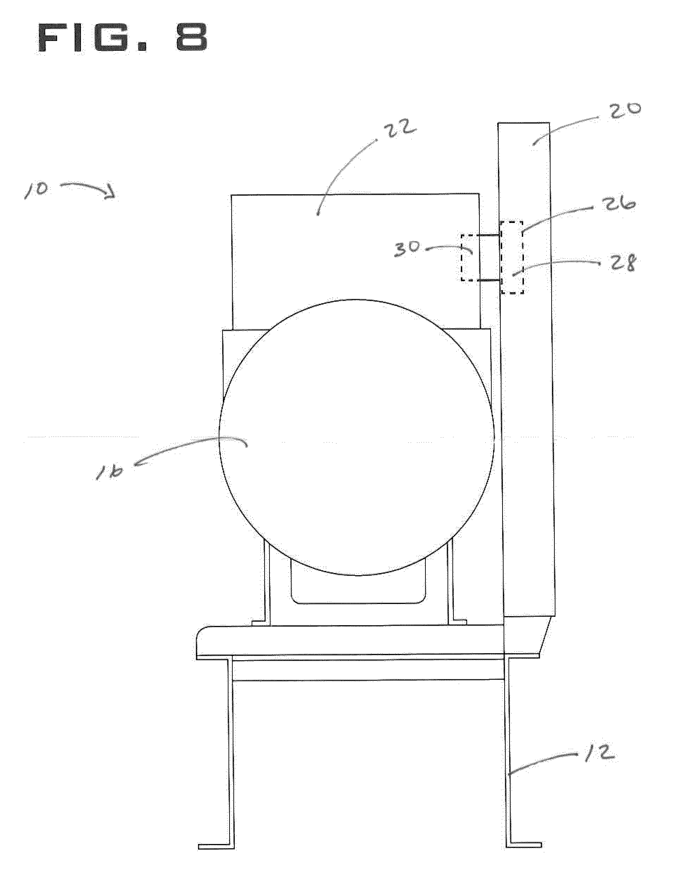

The working of the cable duct 26 will now be described. In general, cable duct 26 may be used to facilitate the routing of cables between any two compartments on a generator set. Figure 7 shows cable duct 26 positioned within an alternator compartment 22. More specifically, the body portion of cable duct 26 is inserted through a hole in a wall 46 of the alternator compartment 22 and into a hole in a wall 48 of an adjacent control panel compartment 20. Adhesive 44, which may be found on the adhesive portion 42 of the inner face 34 of the flange portion 28, may be used to affix the flange portion 28 to wall 46 of the alternator compartment 22. Cable duct 26 is thereby supported by the adhesive 44 on the flange portion and by the body portion resting in the holes of walls 46 and 48 respectively. Cables 24 may then be routed from the alternator compartment 22 through cable duct 26 and into the control panel 20. Depending on preference or space constraints, cable duct 26 may be positioned such that the flange portion 28 is within the alternator compartment 22 as shown in Figure 7, or alternatively, cable duct 26 can be positioned such that the flange portion 28 is positioned within the control panel compartment 20 as shown in Figure 8.

Those skilled in the art will recognize that alternate embodiments, such as those disclosed in Figures 5 and 6, have specific uses that depending space requirements and/or applications. For example, if the cables being routed are larger or heavier, it may be beneficial to use a cable duct having multiple holes, such as that depicted in Figure 5. The body portion 130 of cable duct 126 contains more material than embodiments with a single hole. Therefore, the additional material in cable duct 126 could help support larger or heavier cables.

The ducts 26, 126, 226 disclosed herein may be made be made from a material such as expanded polyethylene or other materials that do not absorb water and are capable of dampening vibrations caused by the generator set. For example, ducts 26, 126, 226 could be made from rubber or other foam material. The use of ducts 26, 126, 226 within a generator set protects cables from the elements and vibrations caused by the generator set. Moreover, the use of ducts 26, 126, 226 allows for cables to be routed in their most direct path thereby eliminating the need for costly cable glands and cable conduits. By routing the cables in their most direct path, shorter cables can be used. This provides a cost savings. Thus, the use of ducts 26, 126, 226, simultaneously provides improved protection and substantial cost savings over other known methods of routing cables.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A cable duct configured for routing cables between compartments of a generator set, the cable duct comprising:
a body portion having an inner face and an outer face and defining a hole extending between the inner face and outer face; and
a flange portion having an inner face and an outer face, and defining a hole extending between the inner face and outer face, and wherein the inner face of the flange portion is in contact with the inner face of the body portion such that the holes respectively defined by the body portion and the flange portion are substantially aligned with one another.

2. The cable duct of claim 1, wherein the inner face of the flange portion includes an adhesive portion defined by the area that is not obscured by the body portion, and wherein the adhesive portion is provided with an adhesive.

3. The cable duct of claim 2, wherein the body portion is configured to extend through a hole in a wall of first compartment of a generator set and into a hole in a wall of a second compartment of a generator set.

4. The cable duct of claim 3, wherein the cable duct is made from an expanded polyethylene material.

5. The cable duct of claim 4, wherein the flange portion further defines a second hole and the body portion further defines a second hole, and wherein respective second holes of the flange portion and the body portion are substantially aligned with one another.

6. The cable duct of claim 5, wherein the body portion and flange portion are made of a single piece or separate pieces of material.

7. A generator set comprising:
an engine;
an alternator; and
a cable duct configured for routing cables between compartments of a generator set, the cable duct comprising:
a body portion having an inner face and an outer face and defining a hole extending between the inner face and outer face; and
a flange portion having an inner face and an outer face, and defining a hole extending between the inner face and outer face, and wherein the inner face of the flange portion is in contact with the inner face of the body portion such that the holes respectively defined by the body portion and the flange portion are substantially aligned with one another.

8. The generator set of claim 7, wherein the inner face of the flange portion includes an adhesive portion defined by the area that is not obscured by the body portion, an wherein the adhesive portion is provided with an adhesive configured to affix the flange portion to a wall within a first compartment of the generator set.

9. The generator set of claim 8, wherein the body portion is configured to extend through a hole in the first compartment of the generator set and into a hole in a second compartment of the generator set.

10. The generator set of claim 9, wherein the cable duct is made from an expanded polyethylene material.

11. The generator set of claim 10, wherein the flange portion further defines a second hole and the body portion further defines a second hole, and wherein respective second holes of the flange portion and the body portion are substantially aligned with one another.

12. The generator set of claim 11, wherein the body portion and flange portion are made of a single piece or separate pieces of material.

13. A method of routing cables within a generator set, said method comprising the steps of:
providing a generator set having an engine, an alternator, and a control panel, wherein the control panel is housed within a first compartment and the alternator is housed within a second compartment;
providing a cable duct comprising:
a body portion having an inner face and an outer face and defining a hole extending between the inner face and outer face; and
a flange portion having an inner face and an outer face, and defining a hole extending between the inner face and outer face, and wherein the inner face of the flange portion is in contact with the inner face of the body portion such that the holes respectively defined by the body portion and the flange portion are substantially aligned with one another;
positioning the body portion within a hole in a wall of the first compartment and extending into a hole in a wall of the second compartment; and
routing cables from the control panel in the first compartment through the cable duct and to the alternator in the second compartment.

14. The method of claim 13, further comprising the steps of:
providing adhesive to an adhesive portion of the inner face of the flange portion, wherein the adhesive portion is defined as the area that is not obscured by the body portion; and
securing the adhesive portion to the wall within the first compartment.
